# EUROPEAN PATENT SPECIFICATION

(11) **EP 2 328 300 B1**
(45) Date of publication and mention of the grant of the patent: **05.09.2012**
(21) Application number: 09177409.1
(22) Date of filing: 27.11.2009
(51) Int. Cl.: H04L 12/24, H04L 12/56

(54) **A method for checking a path according to encapsulation functions using a push-down automaton**
Verfahren zum Überprüfen eines Pfads gemäß Einkapselungsfunktionen unter Verwendung eines Kellerautomaten
Procédé de vérification d'un chemin selon les fonctions d'encapsulation à l'aide d'un automate à pile

(43) Date of publication of application: 01.06.2011
(73) Proprietor: Alcatel Lucent, 75007 Paris (FR)
(72) Inventor: Pouyllau, Helia, 91620, NOZAY (FR); Douville, Richard, 91620, NOZAY (FR)
(74) Representative: Nicolle, Olivier

(56) References cited:
- WO-A1-2009/118050
- US-A1- 2003 110 276
- BALIOSIAN J ET AL: "Finite state transducers for policy evaluation and conflict resolution" PROCEEDINGS. INTERNATIONAL WORKSHOP ON POLICIES FOR DISTRIBUTEDSYSTEMS AND NETWORKS, XX, XX, 7 June 2004 (2004-06-07) , pages 1-10, XP002417638

## Description

### FIELD OF THE INVENTION

The present invention relates to a method for checking a path built between a source node and another node for a network system. The invention also relates to a method for building a push-down automaton.

Such a method for checking a path may be used in any network system supporting a plurality of protocols technologies.

### BACKGROUND OF THE INVENTION

When a service has to be established (such as for example a data transmission) between a source node and another node of a network system, an end-to-end path has to be computed satisfying quality of service QoS requirements (e.g. bandwidth superior to a threshold value) expressed by a demand.
A method for checking a path built between a source node and another node for a network system, well-known by the man skilled in the art, is used to check said path according to quality and cost metrics based on the QoS requirements.
Besides, nodes and/or edges of a network system have often several adaptation functions, so that they can interconnect using different protocol technology (e.g. IP, Ethernet, MPLS, etc.). In a not limited example, possible adaptation functions are: a first protocol encapsulating a second protocol, a first protocol desencapsulating a second protocol, the second protocol encapsulating the first protocol, and the second protocol desencapsulating the first protocol.
The patent application US 2003/110276 A1 deals with a tunnel probing device which detects network devices, located along paths associated with a computer network, that include compatible tunneling capabilities (such as transport and encapsulation protocols). For this purpose, said tunnel probing device sends probe packets to the destination host. Each network device along the path transmits a probe response packet describing its transformation tunnel capabilities. A destination host is therefore marked as non-tunneled or tunneled according to the probing responses.
Although, it is preferable that the same protocol is used along the path avoiding adding costs of encapsulation, it might not be possible sometimes to satisfy both the QoS requirements meanwhile having the same protocol. Hence, adaptation functions of nodes and/or edges must be used to permit the delivery of a service.

One problem of the well-known prior art is that it may lead to unfeasible path because of the adaptation functions which do not match along the path. Both nodes can't communicate together using their protocol technologies.

### SUMMARY OF THE INVENTION

It is an object of the invention to provide a method for checking a path built between a source node and another node for a network system, which permits to check if a built path is feasible according to adaptation functions supported by said nodes.

The present invention is defined in the independent claims. The dependent claims define particular embodiments of the invention.

As we will see in further details, the definition of the adaptation functions associated to the built path are in the form of labels of words in order to permit to simply read said labels with a push-down automaton and at the same time modifying a stack associated to said push-down automaton. In order to know if a path is valid or not according to its adaptation functions, there is a check on the stack and the result of the reading of a word.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates a schematic diagram of a method for checking a path according to the invention;
- Fig.2 illustrates a schematic diagram of a push-down automaton used within the method for checking a path of Fig. 1 and according to the invention;
- Fig.3 illustrates a detailed schematic organization chart of the method for checking a path of Fig. 1;
- Fig.4 illustrates a schematic organization chart of a method for building a push-down automaton according to the invention;
- Fig.5 illustrates a schematic network system comprising network management elements which perform the method for checking a path of Fig. 1 and/or the method for building a push-down automaton of Fig. 4;
- Fig.6 illustrates schematically in more details a network management element, within a network system, which is able to perform the method for checking a path of Fig. 1 and the method for building a push-down automaton of Fig. 4.

### DESCRIPTION OF EMBODIMENTS OF THE INVENTION

In the following description, well-known functions or constructions by the man skilled in the art are not described in detail since they would obscure the invention in unnecessary detail.

The present invention relates to a method for checking a path built between a source node and another node for a network system, according to adaptation functions.

In the following description, said method for checking path will also be called first method.

The aim is to check if both nodes could communicate using their corresponding protocol technology. It is to be noted that the terms protocol or technology will be also used indifferently.

It is to be noted that a network system NTW={N, E} is composed of a set of nodes N and a set of edges E, and a built path π is a sequence of edges E and nodes N between the source node NS and the another node Nl. 1.

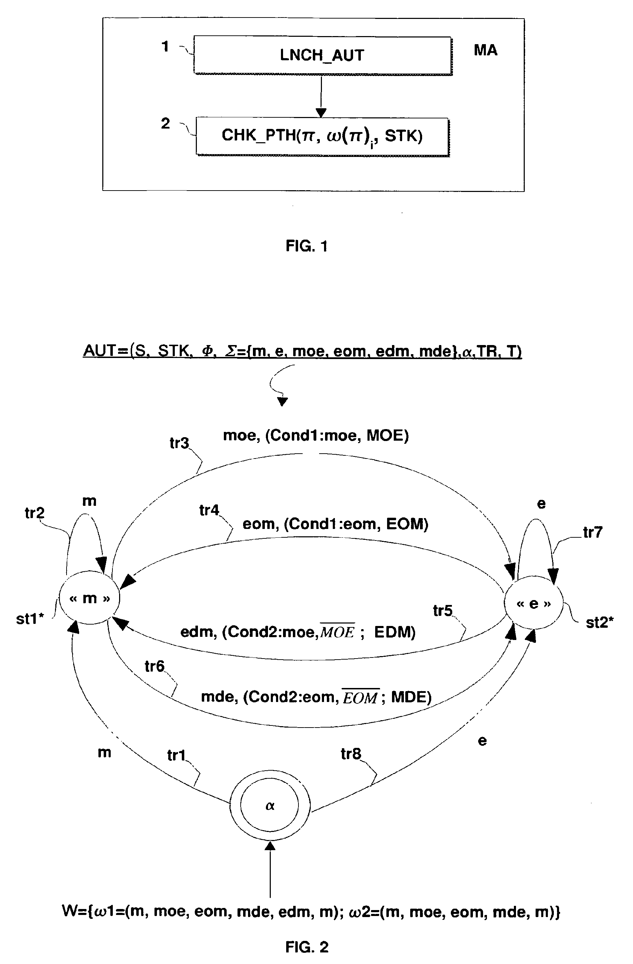

In order to perform a checking of a path built π between a source node NS and another node Nl for a network system NTW, according to adaptation functions, the method MA for checking a path comprises the following steps, as illustrated in Fig. 1:
- launching a push-down automaton AUT for reading a word ω(π) associated to the built path π, a word ω(π) comprising labels 1(π) of an alphabet Σrepresenting technologies tck and adaptation functions supported by edges and/or nodes of the network system NTW, a label 1(π) of a word ω(π) being associated to an edge E or a node N of the built path π (step LNCH_AUT); and
- validating the built path π according to the result of the reading of the word ω(π) and to the state of a stack STK of said push-automaton AUT, said stack STK being modified during the reading of the word ω(π) (step CHK_PTH(π,ω(π),STK).

It is to be noted that the technologies and adaptation functions are supported by nodes N and/or edges of the network system NTW, depending of a choice of model taken for the network system NTW.

It is also to be noted that the labels may be associated to an edge or to a node of the built path, depending of a choice of model taken for the push-down automaton.

As a path π built between a source node NS and another node Nl is a sequence of edges E and nodes N between these two nodes NS and Nl, a word ω(π) may be built using the labels ω(π) on the edges or the nodes belonging to said path π. Since several adaptation functions may be associated to a node and/or an edge, a path π might lead to a set of words W. Therefore in a not limited embodiment, a set of words W is read.

In the following description, protocols such as MPLS ("Multiprotocol Label Switching "), labeled "m" and Ethernet, labeled "e", are taken into a not limited example. The associated adaptation functions are:
- MPLS over Ethernet, labeled "moe", where the MPLS protocol is encapsulated in the Ethernet protocol ;
- Ethernet over MPLS, labeled "eom", where the Ethernet protocol is encapsulated in the MPLS protocol;
- Ethernet from MPLS, which is the inverse adaptation function of "moe", labeled "edm", where the Ethernet protocol is desencapsulated in the MPLS protocol ;
- MPLS from Ethernet, which is the inverse adaptation function of "eom", labeled "mde", where the MPLS protocol is desencapsulated from the Ethernet protocol.

It is to be noted that the first method MA may be used for checking an intermediate path or a final path.

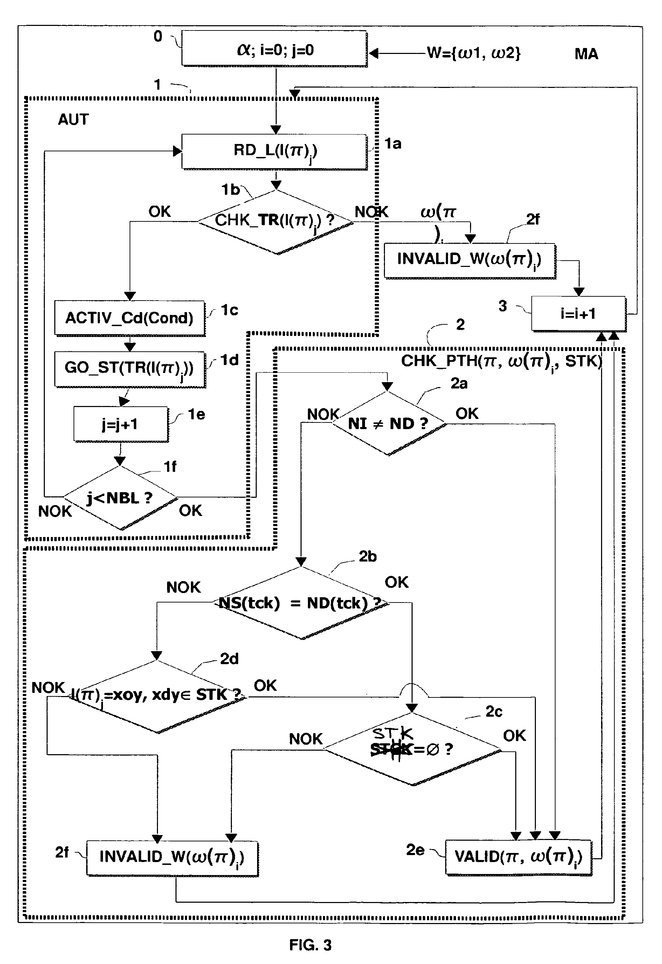

An intermediate path is a path being built between the source node NS and another node Nl, said other node Nl being in this case an intermediate node between the source node NS and a destination node ND to which a service has to be delivered. An intermediate path is therefore a part of a final path. Therefore, in this case, in a not limited embodiment, the validation of the built path πcomprises the sub-step of, as illustrated in Fig. 3:
- when the word ω(π) has been read entirely (step 1f:OK) and the another node Nl is different from a destination node ND (step 2a:OK), validating the path π being built with the adaptation functions corresponding to the word read ω(π) (step 2e: VALlD(π,ω(π)¡)).

The checking of an intermediate path permits to stop the building of a path if one realizes that the intermediate node will not be able to communicate with the source node according to their protocols.

A final path is the end-to-end path between the source node NS and another node Nl, said other node Nl being in this case the destination node ND to which a service has to be delivered.

Therefore, in this case, in a not limited embodiment, the validation of the built path πfurther comprises the sub-steps of, as illustrated in Fig. 3:
- when the word ω(π) has been read entirely (step 1f:OK) and the another node Nl is equal to a destination node ND (step 2a:NOK) :
   - if the source node NS and the destination node ND are of homogeneous technologies tck (step 2b:OK) and if the stack STK is empty (step 2c:OK), validating the path π with the adaptation functions corresponding to the word read ω(π) (step 2e: VALlD(π,ω(π)¡)) ;
   - if the source node NS and the destination node ND are of heterogeneous technologies tck (step 2b:NOK) and if the stack STK comprises a label representative of an adaptation function xoy, xdy (step 2d:OK), validating the path π with the adaptation functions corresponding to the word read ω(π) (step 2e: VALlD(π,ω(π)¡)).

In a not limited embodiment, the top entry of the stack STK is tested. If his top entry is a label representative of an adaptation function xoy, xdy one validates the path π.

The first method MA is described in details below.

In the following, in the not limited embodiment described, the first method MA comprises the further steps and sub-steps above-mentioned.

Reference to the Figs. 1, 2 and 3 will be made.

For the following detailed description, in a not limited example given, a set of words W (associated to the built path π which is to be checked) is composed of two words ω1 and ω2 as following.

W = {ω1 = (m, moe, eom, mde, edm, m) ; ω2= (m, moe, eom, mde, m)}

**In an initialization step 0),** as illustrated in Fig. 3, one initializes a first and a second counters i and j to zero for counting respectively the number of words ω(π) forming the set of words W associated to the built path π, and the number of labels 1(π) within the set of words W.

As illustrated in Fig. 3, the first method MA starts from the initial state α and takes as an input the set of words W.

In a first step 1), as illustrated in Fig. 3, one launches a push-down automaton AUT for reading a word ω(π) associated to the built path π, a word ω(π) comprising labels 1(π) of an alphabet Σrepresenting technologies tck and adaptation functions supported by edges and/or nodes of the network system NTW, a label 1(π) of a word ω(π) being associated to an edge E or a node N of the built path π.

In the not limited example given, one reads the first word ω1 (i=0).

The push-down automaton AUT is described below.

### • Push-down automaton AUT

A schematic diagram of a not limited embodiment of the push-down automaton AUT is illustrated in Fig. 2.

Such a push-down automaton AUT comprises:
- a stack STK and associated stack commands *Φ ;*
- the alphabet Σof labels 1(π) representing technologies and adaptation functions supported by edges E and/or nodes N of the network system NTW ;
- states st and transitions tr which labels 1(π) of the alphabet Σare associated to.

It also comprises an initial state α.

It is to be noted that the set of stack commands is named *Φ* and a stack command is named Cd.

In a not limited embodiment, the following stack commands *Φ* are associated to the stack STK:
- MOE which fills in the stack STK with a "moe" label ;
- EOM which fills in the stack STK with a "eom" label ;
- MDE which fills in the stack STK with a "mde" label ;
- EDM which fills in the stack STK with a "mde" label ;
- MOE which removes a "moe" label from the stack STK ;
- EOM which removes a "eom" label from the stack STK.

In a not limited embodiment, each state st but the initial state α is labeled with a label 1(π) representing a technology tck used within a node and/or an edge of the network system NTW. In the not limited example taken, the technology tck used is the protocol supported by a node and/or an edge, here MPLS of Ethernet.

Hence, the push-automaton AUT may be noted as AUT = {S, STK, Σ, Φ, α , TR, T), with STK the stack and α the initial state, where:
S is the set of states, S={α, "e", "m"};
Σ={m,e,meo,eom,edm,mde};
Φ the stack commands, Φ={MOE. EOM, MDE, EDM, *M̅O̅E̅*, *E̅O̅M̅*};
TR Is the set of transitions tr between the states; and
T={"e","m"} the terminal states.

In order to read a word ω(π), the push-down automaton AUT is able to, as illustrated in Fig. 3:
- read a label l(π) forming said word ω(π) (step 1 a: RD_L(l(π)ⱼ) ;
- check if there is a transition tr associated to the label read l(π) (step 1 b:CHK_TR(l(π)ⱼ)) ;
- if an associated transition tr exists (step 1 b:OK):
   - activate stack commands Φ on the stack STK according to the conditions Cond associated to the transition tr (step 1c: ACTIV_Cd(Cond)) ;
   - go to the egress state st* of the transition tr (step 1d:GO_ST(TR(l(π)ⱼ))) ; and
   - iterate the preceding steps with the next label l(π) of the word ω(π) (step 1e).
These sub-steps are described in detail below.

**In a first sub-step 1a**), as illustrated in Fig.3, one reads a label l(π) forming said word ω(π).
In the not limited example given, one reads the first label "m" of the word ω1 (j=0).

**In a second sub-step 1b),** as illustrated in Fig. 3, one checks if there is a transition tr associated to the label read I(π).

In the not limited example given, there is one transition tr1 associated to the first label read "m" as illustrated in Fig. 2.

**In a third sub-step 1c)**, as illustrated in Fig. 3, one activates stack commands *Φ* on the stack STK according to the conditions read Cond.

It is to be noted that for the initial state α, no stack commands Cd are associated. Therefore, no stack command Cd is activated.

It is to be noted that activating stack commands leads to fill in the stack STK with a label 1(π) or to remove from the stack STK a label I(π), as described hereinafter.

It is to be noted that the conditions Cond will be explained later in the description.

**In a fourth sub-step 1d),** as illustrated in Fig. 3, one goes to the egress state st* of the transition tr.

In the not limited example given, one goes to the egress state st1 * ="m" as illustrated in Fig. 2.

**In a fifth sub-step 1e),** one iterates the preceding sub-steps 1a) to 1d) with the next label 1(π) of the word ω(π)

In practical, the second counter j is increased by one.

In the not limited example given, the next label 1(π) of the word ω1 is "moe" (j=1).

In the not limited example given, for this label "moe":
- there is one transition tr3 associated as illustrated in Fig. 3 (sub-step 1 b) ;
- a first condition Cond1 is associated to the transition tr3. This condition is that the label 1(π) labeling the transition tr3 is representative of an encapsulated adaptation function moe. Therefore, one activates a push command MOE which fills in the stack STK with the label "moe" (sub-step 1 c) ; and
- one goes to the egress state st2*="e" of the transition tr3 (sub-step 1 d).

The following table summarizes for the first word ω1 the different labels read l(π), the associated egress state st*, the state of the stack STK, the associated stack commands Φ activated.

| **ω1 = (m, moe, eom, mde, edm, m)** |
|---|
| l(π) read = "m"; st1 *="m"; STK= {Ø} |
| l(π) read = "moe"; st2*="e"; Cd-MOE; STK= {moe} |
| l(π) read = "eom"; st1*="m"; Cd=EOM; STK= {eom,moe} |
| l(π) read = "mde"; st1*="e"; Cd=*E̅O̅M̅* ; STK= {moe} |
| l(π) read = "edm"; st1*="m"; Cd= *M̅O̅E̅*; STK= {Ø} |
| l(π) read = "m"; st1 *=um"; Cd=Ø; STK= {Ø} |

Hence, once the first word ω1 is read by the push-automaton AUT, the stack STK is empty for the first word ω1.

When all the labels l(π) of the first word ω1 have been proceeded by the push-down automaton AUT (when a corresponding transition tr exists as explained in step 1b) (step 1f:OK; j=5<NBL=6),_with NBL the number of labels l(π) within the word, **in a second step 2),** one validates the built path π according to the result of the reading of said word ω1 and to the associated state of a stack STK of said push-automaton AUT, said stack STK being modified during the reading of the word ω(π) as described above.

The validation comprises the following sub-steps.

***In a first sub-step 2a:OK)*,** when a word ω(π) has been read entirely and the another node NI is different from the destination node ND, one validates the path π being built with the adaptation functions corresponding to the word read ω(π).

It is to be noted that this sub-step Is performed when the path n is being built, i.e. when it is an intermediate path, as the another node Nl is different from the destination node ND.

***In a second sub-step 2a:NOK),*** when the word ω(π) has been read entirely and the another node Nl is equal to the destination node ND, the following sub-steps are performed.

It is to be noted that this sub-step is performed when the path π is a final path.
- If the source node NS and the destination node ND are of homogeneous technologies tck (sub-step 2b:OK) and if the stack STK is empty (sub-step 2c:OK), one validates the path π with the adaptation functions corresponding to the word read ω(π) (sub-step 2e).
- If the source node NS and the destination node ND are of heterogeneous technologies tck (sub-step 2b:NOK) and if the stack STK comprises a label representative of an adaptation function xoy, xdy (sub-step 2d:OK), one validates the path π with the adaptation functions corresponding to the word read ω(π) (sub-step 2e).

Hence, in the not limited example given of the word ω1 :
- a) If the built path π is an intermediate path.

The first word ω1 has been read entirely. Therefore the built path π is validated with the adaptation functions corresponding to this word, that is to say, with the adaptation functions moe, eom, mde, edm. In this case, both nodes NS and ND could communicate using their corresponding protocols.
- b) If the built path π is a final path.

The first word ω1 has been read entirely.
o If the source node NS and the destination node ND are of homogeneous technologies, for example MPLS, as the stack STK is empty for the first word ω1, one validates the built path π with the first word ω1 only, and therefore with the corresponding adaptation functions moe, eom, mde, edm. In this case, both nodes NS and ND could communicate using their corresponding protocols.
o If the source node NS and the destination node ND are of heterogeneous technologies, for example MPLS and Ethernet respectively, as the stack STK is empty for the first word ω1, no validation of the built path π is performed with the first word ω1.

**in a third step 3)**, one iterates the preceding steps 1 and 2 with said next word ω(π) of the set of words W, i.e. the second word ω2.

In practical, the first counter i is increased by one (i=1) and the second counter j is reinitialized to zero. Moreover, one starts from the initial state α.

The following table summarizes for the second word ω2 the different labels read 1(π), the associated egress state st*, the state of the stack STK, the associated stack commands *Φ* activated.

| **ω2= (m, moe, eom, mde, m)** |
|---|
| l(π) read = "m"; st1 *="m"; STK= {Ø} |
| l(π) read = "moe"; st2*="e"; Cd=MOE; STK= {moe} |
| l(π) read = "eom"; st1*="m"; Cd=EOM; STK= {eom,moe} |
| l(π) read = "mde"; st1*="e"; Cd=*E̅O̅M̅* ; STK= {moe} |
| l(π) read = "m"; st1 *="m"; Cd=Ø; STK= {moe} |

Hence, once the second word ω2 is read by the push-automaton AUT, the stack STK is not empty for the second word ω2 but is fill in with the label moe.

When all the labels 1(π) of the second word ω2 have been proceeded by the push-down automaton AUT (when a corresponding transition tr exists as explained in step 1 b) (step 1 f:OK; j=4<NBL=5), in a second step 2), one validates the built path π according to the results of the reading of said word ω2 and to the associated state of the stack STK.

The validation comprises the following sub-steps.

Hence, in the not limited example given of the word ω2:
- a) If the built path ω is an intermediate path.

The second word ω2 has been read entirely. Therefore the built path π is validated with the adaptation functions corresponding to this word, that is to say, with the adaptation functions moe, eom, mde.
- b) If the built path π is a final path.

The second word ω2 have been read entirely.
o If the source node NS and the destination node ND are of homogeneous technologies, for example MPLS, as the stack STK is not empty for the second word ω2, no validation of the built path π is performed with the second word ω2.
o If the source node NS and the destination node ND are of heterogeneous technologies, for example MPLS and Ethernet respectively, as the stack STK is filled in with the encapsulated adaptation function "moe" for the second word ω2, one validates the built path π with the second word ω2, and therefore with the corresponding adaptation functions moe, eom, mde.

It is to be noted that in a not limited embodiment, if there is no associated transition tr associated to the label read 1(π) of a word ω(π) , one reiterates the preceding steps with the next word ω(π) of the set of words W (as illustrated in Fig. 3 : step 3). Thus, one stops the reading of the current word ω(π) and one goes to the next word ω(π)

It is to be noted that a built path π is validated, that means is feasible, when at least a word ω(π) of the set of word W is "validated" according to the conditions above-described.

And, a built path π is invalidated, that means is not feasible, when all the words ω(π) of the set of words W associated to said path are "invalidated" according to the conditions above-described. This means when the built path π has been validated by none of the word ω(π) of a set of words W.

In other words, a word is invalidated (step INVALlD_W(ω(π))) when:
- The source node NS and the destination node ND are of homogeneous technologies tck (sub-step 2b:OK) but the stack STK is not empty (sub-step 2c:NOK) ; or
- If the source node NS and the destination node ND are of heterogeneous technologies tck (sub-step 2b:NOK) but the stack STK is empty (sub-step 2d:NOK).

It is to be noted that in a first not limited above-described, the validation of a built path π is performed each time a word ω(π) of the set of words W has been proceeded by the push-automaton AUT.

In a second not limited embodiment, the validation of a built path π is performed after all the words ω(π) of the set of words W have been proceeded by the push-automaton AUT. In this case, all the words read (entirely or not) are saved in a memory waiting for the step 2) to be performed. The same applied for the state of the stack STK associated to each word read ω(π).

In a not limited variant of the first and second embodiment, the step 2) of validation returns the number NBW of words ω(π) of the set of words W which have validated the path π, words which may be also called words validated. It permits to acquire a quality factor.

For example, the number NBW=2 for the case a) above-mentioned, as the two words ω1 and ω2 have been validated for the validation of the built path, and the number NBW=1 for the case b) above-mentioned, as there is only one word which has been validated for the validation of the built path (either ω1 or ω2).

Therefore, the first method MA permits to check the adaptation functions of a built path π and to validate said path π, either for an intermediate path, or for a final path and this thanks to the push-down automaton AUT.

### • Building of the push-down automaton AUT

It is to be noted that push-down automaton AUT described is built by a method MC for building a push-down automaton AUT for reading a word ω(π) associated to the built path π, a word ω(π) comprising labels 1(π) of an alphabet Σrepresenting technologies tck and adaptation functions supported by edges and/or nodes of the network system NTW, a label 1(π) of a word ω(π) being associated to an edge E or a node N of the built path π, said push-down automaton AUT comprising :
- a stack STK and associated stack commands*Φ*;
- the alphabet Σof labels 1(π) representing technologies and adaptation functions supported by edges and/or nodes of the network system NTW ;
- states st and transitions tr which labels 1(π) of the alphabet Σare associated to.

In the following description, said method for building a push-down automaton will also be called second method.

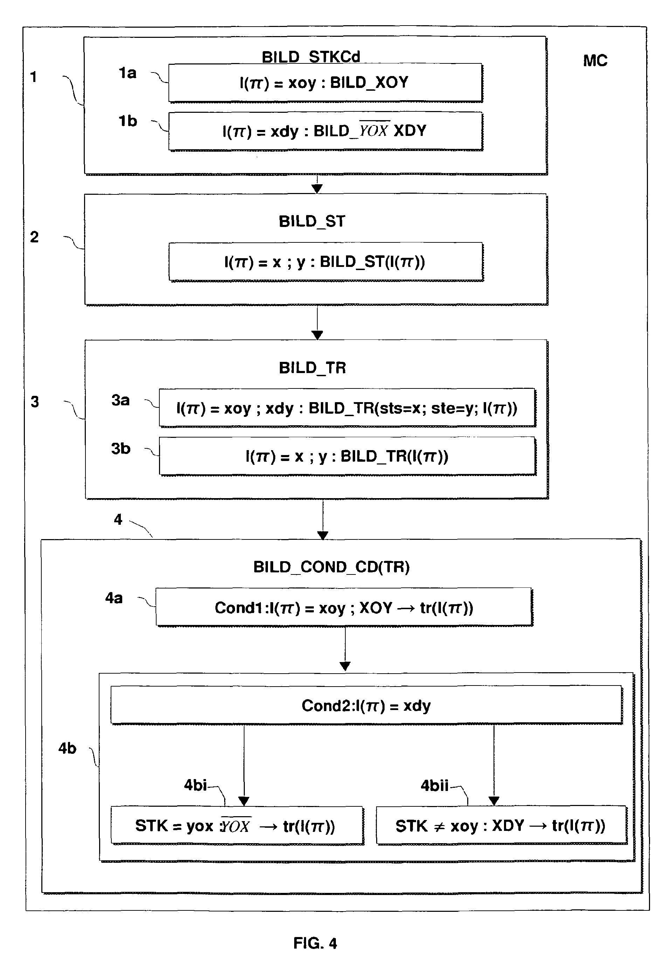

Said second method MC is illustrated in a not limited embodiment in Fig. 4. It comprises the steps of:
- building stack commands *Φ*, (step BILD_STCKCd) where :
   - when a label 1(π) of an alphabet Σis representative of an encapsulation adaptation function xoy, build a push command XOY which is able to fill in a stack STK with said label 1(π) (step 1a:BILD_XOY) ;
   - when a label 1(π) of an alphabet Σis representative of a desencapsulation adaptation function xdy, build a remove command *Y̅O̅X̅* which is able to remove the inverse label 1(π) from the stack STK and build a push command which is able to fill in the stack STK with said label 1(π) (step 1b:BILD_*Y̅O̅X̅* XDY) ;
- building states st of the push-down automaton AUT (step BILD_ST), where :
   - when a label 1(π) of an alphabet Σis representative of a technology tck used within a node and/or an edge, build a state st which is named with said label 1(π) ;
- building transitions tr of the push-down automaton AUT (step BILD_TR), where :
   - for each label 1(π) of an alphabet Σrepresentative of an adaptation function xoy, xdy, build a transition tr having as start state sts the first letter of said label 1(π), and having as end state ste the last letter of said label 1(π), and labeled said transition tr with said label 1(π) (step 3a:BILD_TR(sts=x; ste=y; l(π))) ,
   - for each label 1(π) of an alphabet Σrepresentative of a technology used tck within a node and/or an edge, build a reflexive transition tr over its corresponding state st, and labeled said transition tr with said label 1(π) (step 3b:BILD_TR(1(π))) ;
- associating stack commands *Φ* to said transitions tr built according to conditions Cond (step 4:BILD_COND_CD(TR), where :
   - when the label 1(π) labeling a transition tr is representative of an encapsulated adaptation function xoy, the corresponding stack command Cd is associated to the transition tr (step 4a) ;
   - when the label 1(π) labeling a transition tr is representative of a desencapsulation adaptation function xdy and if the top entry of the stack STK is filled in with the inverse adaptation function yox, the corresponding remove command *Y̅O̅X̅* is associated to the transition tr (step 4bi), otherwise the corresponding push command XDY is associated to the transition tr (step 4bii).

In a not limited embodiment, a label 1(π) of an alphabet Σ representative of an adaptation function is composed of three letters xoy, xdy, the first and third letters representing the technologies tck supported by the adaptation function, and the second letter (o or d) representing a type TY of the adaptation function.

In a not limited embodiment, a label 1(π) of an alphabet Σ representative of a technology tck used within a node and/or an edge is composed of a single letter.

Hence, in the example above given:

The label 1(π) of an alphabet Σrepresentative of an adaptation function MPLS over Ethernet is composed of three letters moe, the first and third letters, respectively m and e, representing the technologies tck supported by the adaptation function, respectively MPLS and Ethernet, and the second letter representing a type TY of the adaptation function, i.e. here "o" for the encapsulation.

The same applied for the adaptation function Ethernet over MPLS which label is eom.

In the same manner, the label 1(π) of an alphabet Σrepresentative of the inverse adaptation function of eom : MPLS from Ethernet is composed of three letters mde, the first and third letters, respectively m and e, representing the technologies tck supported by the adaptation function, respectively MPLS and Ethernet, and the second letter representing a type TY of the adaptation function, i.e. here "d" for desencapsulation.

The same applied for the inverse adaptation function of moe which label is edm.

The second method MC is described in details hereinafter.

The same example taken for the first method MA and illustrated in Fig.2. is taken as a not limited example. Thus, reference to Fig. 2 and Fig. 4 will be made.

**In a first step 1)**, one builds stack commands *Φ* as following.
- When a label 1(π) of an alphabet Σis representative of an encapsulation adaptation function moe, eom, one builds a push command respectively MOE, EOM which is able to fill in the stack STK with said label 1(π) moe, eom respectively.
- When a label 1(π) of an alphabet Σis representative of a desencapsulation adaptation function mde, edm, one builds a remove command *E̅O̅M̅ , M̅O̅E̅* which is able to remove the inverse label 1(π), respectively eom, moe, from the stack STK, and one builds a push command MDE, EDM which is able to fill in the stack STK with said label mde, edm respectively.

**In a second step 2)**, one builds states st of the push-down automaton AUT as following.

When a label 1(π) of an alphabet Σis a single letter representative of a technology tck used within a node and/or an edge, in the example e or m, one builds a state, respectively st1 * and st2*, which is named with said label e or m.

**In a third step 3)**, one builds transitions tr of the push-down automaton AUT as following.

Hence, as illustrated in Fig. 2, for the label moe representative of the MPLS over Ethernet adaptation function, one builds the transition tr3 having the start state sts=st1*= "m" and as end state ste=st2*="e", and labeled said transition tr3=moe.

For the label eom representative of the Ethernet over MPLS adaptation function, one builds the transition tr4 having the start state sts=st2*= "e" and as end state ste=st1 *="m", and labeled said transition tr4=eom.

For the label "mde" representative of the inverse adaptation function of eom, one builds the transition tr6 having the start state sts=st1*= "m" and as end state ste=st2*="e", and labeled said transition tr6=mde.

For the label edm representative of the inverse adaptation function of moe, one builds the transition tr5 having the start state sts=st2*= "e" and as end state ste=st1 *="m", and labeled said transition tr5=edm.

Finally, as illustrated in Fig. 2, for the label m representative of the MPLS technology used within a node and/or an edge, one builds a reflexive transition tr2 over its corresponding state st1*, and labeled said transition tr2 with said label m.

And for the label e representative of the Ethernet technology used within a node and/or an edge, one builds a reflexive transition tr7 over its corresponding state st2*, and labeled said transition tr7 with said label e.

**In a fourth step 4),** one associates stack commands *Φ* to said transitions tr built according to conditions Cond as following.

In a not limited embodiment, two conditions Cond1 and Cond2 are used.

Regarding the first condition Cond1: when the label 1(π) labeling a transition tr is representative of an encapsulated adaptation function xoy, the corresponding stack command XOY is associated to the transition tr.

Hence, for the label moe, the stack command MOE is associated to the transition tr3.

For the label eom, the stack command EOM is associated to the transition tr4.

Regarding the second condition Cond2: when the label 1(π) labeling a transition tr is representative of a desencapsulation adaptation function xdy and if the top entry of the stack STK is filled in with the inverse adaptation function yox, the corresponding remove command *Y̅O̅X̅* is associated to the transition tr, otherwise the corresponding push command XDY is associated to the transition tr.

Hence, for the label mde, if the top entry of the stack STK is eom, the remove command *E̅O̅M̅* is associated to the transition tr6, otherwise the push command MDE is associated.

For the label edm, if the top entry of the stack STK is moe, the remove command *M̅O̅E̅* is associated to the transition tr5, otherwise the push command EDM is associated.

It is to be noted that these conditions Cond are part of the push-automaton AUT as the stack STK, the stack commands *Φ*, the transitions tr, the states st etc. as described before.

The method MA for checking a path and the method MC for building a push-down automaton above-described are carried out by a network management element NME of a system NTW.

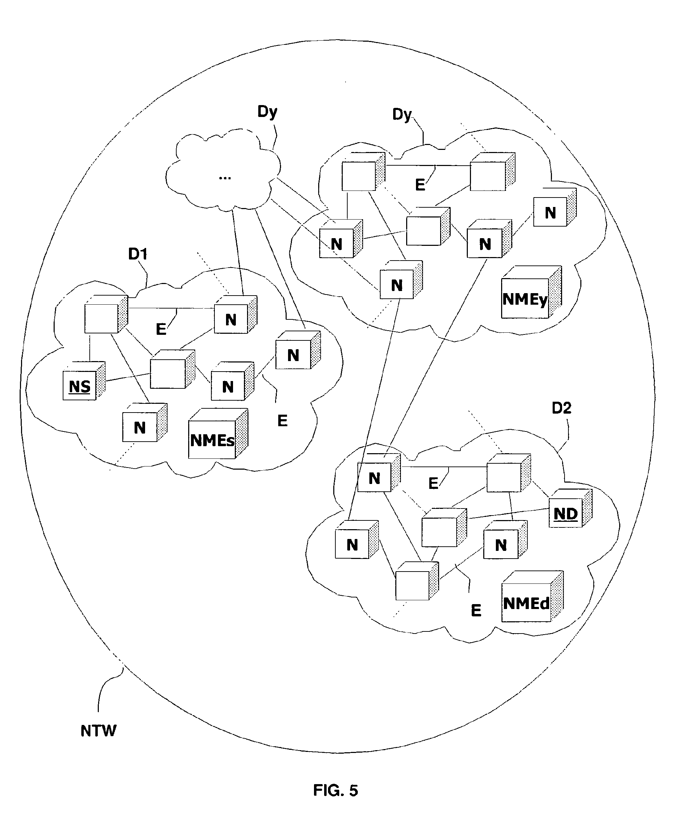

As illustrated on Fig. 5, in the not limited schematic example given, said network system NTW is a multi-domain network and is able to manage:
- a source domain D1;
- a plurality of intermediate domains Dy;
- a destination domain D2;
each comprising a plurality of nodes N and edges E and one network management element NMEs, NMEy, and NMEd respectively. Of course, other architectures may be taken as examples where a domain D comprises a plurality of network management elements NME.

In order to simplify the Fig. 5, it is to be noted that not all the edges E and the nodes N have been referenced in the Fig. 5.

In this example, the network system NTW is able to manage:
- a source network management element NMEs which is within the source domain D1 comprising the source node NS ;
- intermediate network management elements NMEy which are within intermediate domains Dy between the source domain D1 and a destination domain D2, said intermediate domains Dy comprising intermediate nodes Nl which are between the source node NS and the destination node ND ; and
- the destination network management element NMEd which is within the destination domain D2 comprising the destination node ND.

It is to be noted that in a not limited embodiment, a domain is a collection of network management elements NME within a common sphere of address management or computational responsibility as defined in the IETF standard. In not limited examples, a domain may be an Autonomous System (AS), an interior gateway protocol IGP routing area, or a Generalized Multiprotocol Label Switching overlay network layer.

It is to be noted that:
- An autonomous system AS usually refers to a group of routers within a network that are subject to a common authority and use the same intra-domain routing protocol.
- An area usually refers to a collection of routers that share full network topology information with each other but not necessarily with routers outside the area even those with which they share common administrative control.

It is to be noted that a network management element NME is aware of:
- the topology of its own domain D, that is to say of how the nodes of said domain D are arranged physically altogether within said domain D, and how they communicate with one another, and what are the Traffic Engineering capabilities (e.g. maximal bandwidth, transmission delay, etc.) on their links;
- the neighbor domains Dn of its own domain D; and
- the border nodes of the neighbor domains Dn;
- the network management elements NME of its neighbor domains.

To this end, a network management element uses a database.

In not limited examples, a network management element NME is:
- a Network Management System, NMS ;
- a Path Computation Element, PCE as per specified in the document RFC4555 ― A Path Computation Element (PCE) ― based Architecture ― August 2006. In this case the database aforementioned is called traffic Engineering Database (TED) ;
- a router ;
- an Operational Support System, OSS;
- an administrative owner AO.

It is to be noted that the nodes N described in a not limited example are routers. Thus, when a router NS of the domain D1 (called the source node or here a source router) wants to transmit some data to router ND of another domain D2 (called a destination node or here a destination router), it delivers a service to the destination router ND. The first method MA is thus start up by a source network management element NMEs within the source domain D1, intermediate network management elements NMEy within intermediate domain Dy, and the destination network management element NMEd within the destination domain D2.

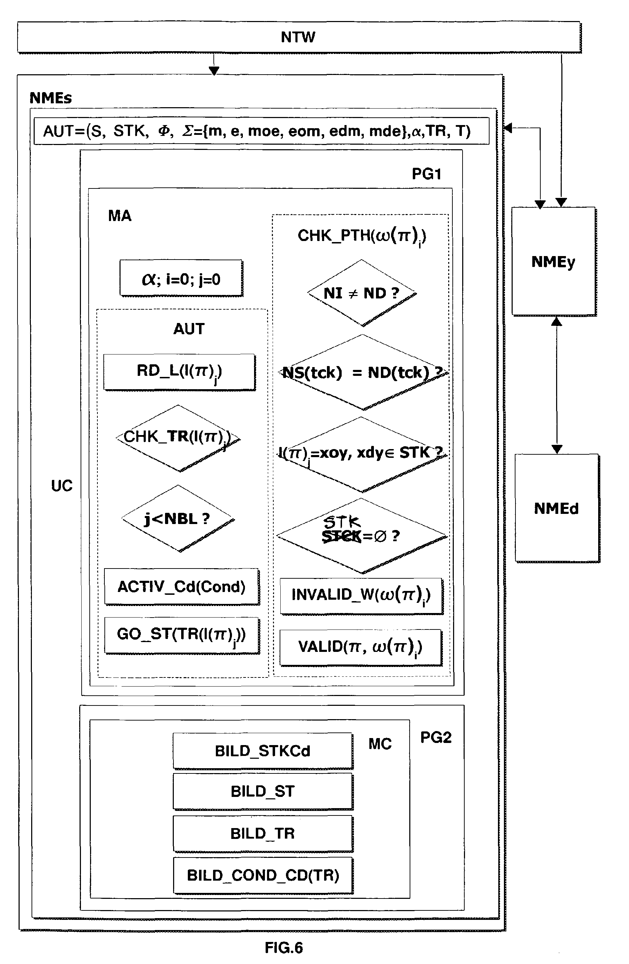

The source, intermediate and destination network management elements NME are described hereinafter according to Fig. 6.

It is to be noted that in Fig. 6, in view of efficiency, only the source network management element NMEs has been illustrated in detailed. The same description is to be applied to the intermediate and destination network management elements NMEy and NMEd.

As illustrated in Fig. 6, a network management element NME for checking a path π built between a source node NS and another node Nl for a network system NTW, according to adaptation functions, said network management element NME comprises the push-down automaton AUT.

As illustrated in Fig. 6, a network management element NMEs for checking a path π built between a source node NS and another node Nl for a network system NTW, according to adaptation functions, is able to carry out the method MA for checking a path.

In a not limited embodiment, said network management element NMEs comprises in particular a control unit UC which is able to:
- launch a push-down automaton AUT for reading a word ω(π) associated to the built path π, a word ω(π) comprising labels 1(π) of an alphabet Σrepresenting technologies tck and adaptation functions supported by edges and/or nodes of the network system NTW, a label 1(π) of a word ω(π) being associated to an edge or a node of the built path π ; and
- validating the built path π according to the result of the reading of the word ω(π) and to the state of a stack STK of said push-automaton AUT, said stack STK being modified during the reading of the word ω(π).

In not limited embodiments, the control unit UC is further able to perform the corresponding sub-steps of the validation as described before.

As further illustrated in Fig. 6, a network management element NMEs for checking a path π built between a source node NS and another node Nl for a network system NTW, according to adaptation functions, is able to carry out the method MC for building a push-down automaton.

In a not limited embodiment, said network management element NMEs comprises in particular a control unit UC which is able to:
- build stack commands *Φ*, where :
   - when a label 1(π) of an alphabet Σis representative of an encapsulation adaptation function xoy, build a push command XOY which is able to fill in a stack STK with said label 1(π) ;
   - when a label 1(π) of an alphabet Σis representative of a desencapsulation adaptation function xdy, build a remove command *Y̅O̅X̅* which is able to remove the inverse label 1(π) from the stack STK and build a push command XDY which fill in the stack STK with said label xdy ;
- build states st of the push-down automaton AUT, where :
   - when a label 1(π) of an alphabet Σis representative of a technology tck used within a node and/or an edge, build a state st which is named with said label 1(π) ;
- build transitions tr of the push-down automaton AUT (step BILD_TR), where :
   - for each label 1(π) of an alphabet Σrepresentative of an adaptation function xoy, xdy, build a transition tr having as start state sts the first letter of said label 1(π), and having as end state ste the last letter of said label l(π), and labeled said transition tr with said label l(π) ;
   - for each label l(π) of an alphabet Σ representative of a technology used tck within a node and/or an edge, build a reflexive transition tr over its corresponding state st, and labeled said transition tr with said label l(π) ;
- associate stack commands Φ to said transitions tr built according to conditions Cond, where :
   - when the label l(π) labeling a transition tr is representative of an encapsulated adaptation function xoy, the corresponding stack command Cd is associated to the transition tr;
   - when the label l(π) labeling a transition tr is representative of a desencapsulation adaptation function xdy and if the top entry of the stack STK is filled in with the inverse adaptation function yox, the corresponding remove command *Y̅O̅X̅* is associated to the transition tr, otherwise the corresponding push command XDY is associated to the transition tr.

It is to be understood that the present invention is not limited to the aforementioned application.
Hence, the first method MA may be used for inter-domain path computation such as in not limited examples:
- Intra-carrier case:
   - in optics, when an operator network is split in multiple domains with each domain gathering transport equipments from one operator for example.
   - in IP/MPLS (Internet Protocol/Multiprotocol Label Switching), when an operator network is divided into multiple domains (i.e. IGP areas) for scalability purpose.
- Inter-carrier case: where each operator NME is likely to know about its neighbor network management element NME.

It is to be noted that the not limited example of a multi-domain network system (inter-domain or intra-domain) comprising a plurality of network management elements NME has been given, but of course the invention also applies to network system without any domains.

It is to be understood that the present invention is not limited to the aforementioned embodiments.

Hence, in not limited examples, other adaptation functions may be used, based on other technologies, such as in not limited examples IP or the Synchronous Digital Hierarchy protocol SDH.

Thus, the other adaptation functions may be:
- MPLS over IP
- IP over MPLS
- Ethernet over IP ;
- IP over Ethernet;
- Synchronous Digital Hierarchy (SDH) over Ethernet ;
- Ethernet over SDH;
the corresponding desencapsulation adaptation functions :
- IP from MPLS ;
- MPLS from IP ;
- IP from Ethernet ;
- Ethernet from IP ;
- MPLS from Ethernet ;
- Ethernet from MPLS ;
- Ethernet from SDH ;
- SDH over Ethernet.

It is to be understood that the methods and the elements according to the invention are not limited to any implementation.

There are numerous ways of implementing functions of the first method MA and of the second method MC by means of items of hardware or software, or both, provided that a single item of hardware or software can carry out several functions. It does not exclude that an assembly of items of hardware or software or both carry out a function. For example, the step of building stack commands may be combined with the step of building states of the push down automaton, thus forming a single function without modifying the building method MC in accordance with the invention.

Said hardware or software items can be implemented in several manners, such as by means of wired electronic circuits or by means of a computer program product that is suitable programmed respectively. A first computer program product PG1 can be contained in a computer or in a network management element NME and in the same manner, a second computer program product PG2 can be contained in a computer or in a network management element NME, said NME comprising a unit control as described previously, said unit control being hardware or software items as above stated.

The first computer program product PG1 comprises a first set of instructions. Thus, said first set of instructions contained, for example, in a computer programming memory or in a network management element memory NME, may cause the computer or the network management element NME to carry out the different steps of the method MA for checking a path (and thus the different steps of the push-down automaton AUT).

The second computer program product PG2 comprises a second set of instructions.

Thus, said second set of instructions contained, for example, in a computer programming memory or in a network management element memory NME memory, may cause the computer or the network management element memory NME to carry out the different steps of the method MC for building a push-down automaton.

The different sets of instructions may be loaded into the programming memory by reading a data carrier such as, for example, a disk. A service provider can also make the set of instructions available via a communication network such as, for example, the Internet.

In another limited embodiment, a third computer program product (not illustrated) can be contained in a computer or in a network management element NME, said third computer program product comprising a third set of instructions. Said third set of instructions contained, for example, in a computer programming memory or in a network management element memory NME, may cause the computer or the network management element NME to carry out the different steps of the push automaton AUT.

In another not limited embodiment, the push automaton AUT comprises a unit control which is able to read a label, check if there is a transition, activate stack commands etc. as described before, said unit control being hardware or software items as above stated. In this embodiment, the third computer program product (not illustrated) can be contained in a computer or in the push-down automaton.

Hence, some embodiments of the invention may comprise one or a plurality of the following advantages:
- it avoids leading to unfeasible paths as the cited prior art;
- it permits to have a complete automatic procedure to check the feasibility of a path built between two nodes according to adaptation functions;
- it permits to check the final path built between a source node and a destination node, but also an intermediate path built between a source node and an intermediate node ;
- it is simple to implement ;
- it permits to find a feasible path that allows multiple encapsulation/desencapsulation in an efficient manner ;
- it permits to find a feasible path subject to traffic engineering constraints such as adaptiveness constraint based on adaptation functions ;
- it permits to give a solution which may be deployed within a service layer architecture to allow inter-carrier service ;
- it permits to give a solution which may be used in general in any algorithms which builds a path between two nodes. These algorithms may be in not limited examples, an ant algorithm, a genetic algorithm, a dijkstra algorithm, a bellman-ford algorithm, a dynamic programming algorithm ;
- the first method may be dynamically set up and thus the push-down automaton may evolve in the same time as the alphabet evolves ;
- it has a runtime performance linear to the alphabet and word sizes, which better than a runtime performance exponential or polynomial ; and
- it could be used with any alphabet representing functions similar to encapsulation/desencapsulation adaptation functions such as in not limited examples encryption/decryption functions.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. A method (MA) for checking a path (π) built between a source node (NS) and another node (NI) for a network system (NTW), according to adaptation functions, **characterized in that** said method comprises the steps of :
- launching a push-down automaton (AUT) for reading a word (ω(π)) associated to the built path (π), the word (ω(π)) comprising labels (l(π)) of an alphabet (Σ) representing protocol technologies (tck) and adaptation functions supported by edges and/or nodes of the network system (NTW), a label (l(π)) of the word (ω(π)) being associated to an edge (E) or a node (N) of the built path (π) ; and
- validating the built path (π) according to the result of the reading of the word (ω(π)) and to the state of a stack (STK) of said push-down automaton (AUT), said stack (STK) being modified during the reading of the word (ω(π)), the validation of the built path (π) comprises the sub-steps of :
- when the word (ω(π)) has been read entirely and the another node (NI) is different from a destination node (ND), validating the path (π) being built with the adaptation functions corresponding to the word read (ω(π)) ;
- when the word (ω(π)) has been read entirely and the another node (NI) is equal to a destination node (ND) :
- if the source node (NS) and the destination node (ND) are of homogeneous protocol technologies (tck) and if the stack (STK) is empty, validating the path (π) with the adaptation functions corresponding to the word read (ω(π)) ;
- if the source node (NS) and the destination node (ND) are of heterogeneous protocol technologies (tck) and if the stack (STK) comprises a label representative of an adaptation function , validating the path (π) with the adaptation functions corresponding to the word read (ω(π)).

2. A method (MA) according to the previous claim 1, wherein a set of words (W) is read.

3. A method (MA) according to the any one of the previous claims, wherein the push-down automaton (AUT) comprises :
- the stack (STK) and associated stack commands (Φ);
- the alphabet (Σ) of labels (l(π)) representing protocol technologies (tck) and adaptation functions supported by edges and/or nodes of the network system (NTW) ;
- states (st) and transitions (tr) which labels (l(π)) of the alphabet (Σ) are associated to;
said push-down automaton (AUT) being adapted to:
- read a label (l(π)) forming said word (ω(π)) ;
- check if there is a transition (tr) associated to the label read (l(π)) ;
- if an associated transition (tr) exists :
- activate stack commands (Φ) on the stack (STK) according to conditions (Cond) associated to the transition (tr) ;
- go to the egress state (st*) of the transition (tr) ; and
- iterate the preceding steps with the next label (l(π)) of the word (ω(π)).

4. A push-down automaton (AUT) adapted to read a word (ω(π)) associated to a built path (π), the word comprising labels (l(π)) of an alphabet (Σ) representing protocol technologies (tck) and adaptation functions supported by edges and/or nodes of a network system (NTW), a label (l(π)) of the word (ω(π)) being associated to an edge (E) or a node (N) of the built path (π), said push-down automaton (AUT) comprising:
- a stack (STK) and associated stack commands (Φ) ;
- the alphabet (Σ) of labels (l(π)) representing protocol technologies (tck) and adaptation functions supported by edges and/or nodes of the network system (NTW) ;
- states (st) and transitions (tr) which labels (l(π)) of the alphabet (Σ) are associated to;
said push-down automaton (AUT) being adapted to :
- read a label (l(π)) forming said word (ω(π)) ;
- check if there is a transition (tr) associated to the label read (l(π)) ;
- if an associated transition (tr) exists :
- activate stack commands (Φ) on the stack (STK) according to conditions (Cond) associated to the transition (tr) ;
- go to the egress state (st*) of the transition (tr) ; and
- iterate the preceding steps with the next label (l(π)) of the word (ω(π)).

5. A method (MC) for building a push-down automaton (AUT) for reading a word (ω(π)) associated to a built path (π), the word (ω(π)) comprising labels (l(π)) of an alphabet (Σ) representing protocol technologies (tck) and adaptation functions supported by edges and/or nodes of a network system (NTW), a label (l(π)) of the word (ω(π)) being associated to an edge (E) or a node (N) of the built path (π), said push-down automaton (AUT) comprising :
- a stack (STK) and associated stack commands (Φ);
- the alphabet (Σ) of labels (l(π)) representing protocol technologies and adaptation functions supported by edges and/or nodes of the network system (NTW) ;
- states (st) and transitions (tr) which labels (l(π)) of the alphabet (Σ) are associated to;
said method (MC) comprising the steps of :
- building stack commands (Φ), where :
- when a label (l(π)) of the alphabet (Σ) is representative of an encapsulation adaptation function (xoy), build a push command (XOY) which is able to fill in the stack (STK) with said label (l(π)) ;
- when a label (l(π)) of the alphabet (Σ) is representative of a desencapsulation adaptation function (xdy), build a remove command (*Y̅O̅X̅*) which is able to remove the inverse label (l(π)) from the stack (STK) and build a push command (XDY) which is able to fill in the stack with said label (l(π)) ;
- building states (st) of the push-down automaton (AUT), where :
- when a label (l(π)) of the alphabet (Σ) is representative of a protocol technology (tck) used within a node and/or an edge, build a state (st) which is named with said label (l(π));
- building transitions (tr) of the push-down automaton (AUT), where :
- for each label (l(π)) of the alphabet (Σ) representative of an adaptation function (xoy, xdy), build a transition (tr) having as start state (sts) the first letter of said label (l(π)), and having as end state (ste) the last letter of said label (l(π)), and label said transition (tr) with said label (l(π));
- for each label (l(π)) of the alphabet (Σ) representative of a protocol technology used (tck) within a node and/or an edge, build a reflexive transition (tr) over its corresponding state (st), and label said transition (tr) with said label (l(π));
- associating stack commands (Φ) to said transitions (tr) built according to conditions (Cond), where :
- when the label (l(π)) labeling a transition (tr) is representative of an encapsulated adaptation function (xoy), the corresponding push command (XOY) is associated to the transition (tr) ;
- when the label (l(π)) labeling a transition (tr) is representative of a desencapsulation adaptation function (xdy) and if the top entry of the stack (STK) is filled in with the inverse adaptation function (yox), the corresponding remove command (*Y̅O̅X̅*) is associated to the transition (tr), otherwise the corresponding push command (XDY) is associated to the transition (tr).

6. A method (MC) according to the preceding claim, wherein a label (l(π)) of the alphabet (Σ) representative of an adaptation function is composed of three letters (xoy, xdy), the first and third letters representing the protocol technologies (tck) supported by the adaptation function, and the second letter representing a type TY of the adaptation function.

7. A method (MC) according to any one of the previous claims 5 or 6, wherein a label (l(π)) of the alphabet (Σ) representative of a protocol technology (tck) used within a node and/or an edge is composed of a single letter.

8. A method (MC) according to any one of the previous claims 5 to 7, wherein the protocol technology (tck) is Ethernet, IP, Multiprotocol Label Switching (MPLS), or Synchronous Digital Hierarchy (SDH).

9. A method (MC) according to any one of the previous claims 5 to 8, wherein an adaptation function is :
- Multiprotocol Label Switching (MPLS) over IP ; or
- IP over Multiprotocol Label Switching (MPLS) ; or
- Ethernet over IP ; or
- IP over Ethernet; or
- Multiprotocol Label Switching (MPLS) over Ethernet; or
- Ethernet over Multiprotocol Label Switching (MPLS) ; or
- Synchronous Digital Hierarchy (SDH) over Ethernet; or
one of the corresponding desencapsulation adaptation functions.

10. A network management element (NME) for checking a path (π) built between a source node (NS) and another node (NI) for a network system (NTW),according to adaptation functions, **characterized in that** said network management element (NME) has means for carrying out the method (MA) for checking a path according to any one of the previous claims 1 to 3.

11. A network management element (NME) for checking a path (π) built between a source node (NS) and another node (NI) for a network system (NTW), according to adaption functions, said network management element (NME) having means for carrying out the method (MC) for building a push-down automaton (AUT) according to any one of the previous claims 5 to 9.

12. A network management element (NME) according to any one of the previous claims 10 and 11, wherein the network management element (NME) is :
- a network management system (NMS) ; or
- a path computation element (PCE) ; or
- a router; or
- an operational support system (OSS) ; or
- an administrative owner (AO).

13. A network management element (NME) according to any one of the previous claims 10 to 12, said network management element (NME) comprising the push-down automaton (AUT) according to claim 4.

14. A network system (NTW) for checking a path (π) built between a source node (NS) and another node (NI) for a network system (NTW), according to adaptation functions, said network system having means for managing a network management element (NME) according to the any one of the previous claims 10 to 12.

15. A computer program product (PG1) for a computer, comprising a set of instructions, which when loaded into said computer, causes the computer to carry out the method (MA) for checking a path according to any one of the claims 1 to 3.

16. A computer program product (PG2) for a computer, comprising a set of instructions, which when loaded into said computer, causes the computer to carry out the method (MC) for building a push-down automaton (AUT) according to any one of the claims 5 to 9.

## Patentansprüche

1. Verfahren (MA) zur Überprüfung eines zwischen einem Quellknoten (NS) und einem anderen Knoten (NI) aufgebauten Pfads (π) für ein Netzwerksystem (NTW), in Abhängigkeit von Anpassungsfunktionen, **dadurch gekennzeichnet, dass** das besagte Verfahren die folgenden Schritte umfasst:
- Starten eines Kellerautomaten (AUT) zum Lesen eines dem aufgebauten Pfad (π) zugeordneten Wortes (l(π)), wobei das Wort (ω(π)) Labels (l(π)) eines Alphabets (Σ), welches von Kanten und/oder Knoten des Netzwerksystems (NTW) unterstützte Protokolltechnologien (tck) und Anpassungsfunktionen darstellt, umfasst, wobei ein Label (l(π)) des Wortes (l(π)) einer Kante (E) oder einem Knoten (N) des aufgebauten Pfads (π) zugeordnet ist; und
- Validieren des aufgebauten Pfads (π) gemäß dem Ergebnis des Lesens des Wortes (ω(π)) und dem Zustand eines Kellerspeichers (STK) des besagten Kellerautomaten (AUT), wobei der besagte Kellerspeicher (STK) während des Lesens des Wortes (ω(π)) verändert wird, wobei die Validierung des aufgebauten Pfads (π) die folgenden Teilschritte umfasst:
- wenn das Wort (ω(π)) vollständig gelesen wurde und der andere Knoten (NI) ein anderer als ein Zielknoten (ND) ist, Validieren des Pfads (π), der mit den dem gelesenen Wort (π) entsprechenden Anpassungsfunktionen aufgebaut wird;
- wenn das Wort (ω(π)) vollständig gelesen wurde und der andere Knoten (NI) einem Zielknoten (ND) entspricht:
- Wenn der Quellknoten (NS) und der Zielknoten (ND) gleichwertige Protokolltechnologien (tck) verwenden, und wenn der Kellerspeicher (STK) leer ist, Validieren des Pfads (π) mit den einem gelesenen Wort (ω(π)) entsprechenden Anpassungsfunktionen;
- wenn der Quellknoten (NS) und der Zielknoten (ND) gleichwertige Protokolltechnologien (tck) verwenden, und wenn der Kellerspeicher (STK) ein Label enthält, welches für eine Anpassungsfunktion repräsentativ ist, Validieren des Pfads (π) mit den dem gelesenen Wort (ω(π)) entsprechenden Anpassungsfunktionen.

2. Verfahren (MA) nach dem vorstehenden Anspruch 1, wobei ein Wortsatz (W) gelesen wird.

3. Verfahren (MA) nach einem beliebigen der vorstehenden Ansprüche, wobei der Kellerautomat (AUT) umfasst:
- Den Kellerspeicher (STK) und assoziierte Kellerspeicherbefehle (Φ);
- das Alphabet (Σ) von Labels (l(π)), welche von Kanten und/oder Knoten des Netzwerksystems (NTW) unterstützte Protokolltechnologien (tck) und Anpassungsfunktionen darstellen;
- Zustände (st) und Übergänge (tr), welchen Labels (l(π)) des Alphabets (Σ) zugeordnet sind;
wobei der besagte Kellerautomat (AUT) für das Durchführen der folgenden Schritte ausgelegt ist:
- Lesen eines Labels (l(π)), welches das besagte Wort (ω(π)) bildet;
- Prüfen, ob ein mit dem gelesenen Label (l(π)) assoziierter Übergang (π) besteht (l(π));
- wenn ein assoziierter Übergang (π) besteht:
- Aktivieren der Kellerspeicherbefehle (Ø) auf dem Kellerspeicher (STK) gemäß mit dem Übergang (tr) assoziierten Bedingungen (Cond);
- Schalten in den Ausgangszustand (st*) des Übergangs (tr); und
- Wiederholen der vorstehenden Schritte mit dem nächsten Label (l(π)) des Wortes (ω(π)).

4. Kellerautomat (AUT), ausgelegt für das Lesen eines einem aufgebauten Pfad (π) zugeordneten Wortes (ω(π)), wobei das Wort Labels (l(π)) eines Alphabets (Σ) enthält, welche von Kanten und/oder Knoten eines Netzwerksystems (NTW) unterstützte Protokolltechnologien (tck) und Anpassungsfunktionen darstellen, wobei ein Label (l(π)) des Wortes (ω(π)) einer Kante (E) oder einem Knoten (N) des aufgebauten Pfads (π) zugeordnet ist, wobei der besagte Kellerautomat (AUT) umfasst:
- Einen Kellerspeicher (STK) und assoziierte Kellerspeicherbefehle (Ø);
- das Alphabet (Σ) von Labels (l(π)), welche von Kanten und/oder Knoten des Netzwerksystems (NTW) unterstützte Protokolltechnologien (tck) und Anpassungsfunktionen darstellen;
- Zustände (st) und Übergänge (tr), welchen Labels (l(π)) des Alphabets (Σ) zugeordnet sind;
wobei der besagte Kellerautomat (AUT) für das Durchführen der folgenden Schritte ausgelegt ist:
- Lesen eines Labels (l(π)), welches das besagte Wort (ω(π)) bildet;
- Prüfen, ob ein mit dem gelesenen Label (l(π)) assoziierter Übergang (π) besteht (l(π));
- wenn ein assoziierte Übergang (π) besteht:
- Aktivieren der Kellerspeicherbefehle (Ø) auf dem Kellerspeicher (STK) gemäß mit dem Übergang (tr) assoziierten Bedingungen (Cond);
- Schalten in den Ausgangszustand (st*) des Übergangs (tr); und
- Wiederholen der vorstehenden Schritte mit dem nächsten Label (l(π)) des Wortes (ω(π)).

5. Verfahren (MC) zur Einrichtung eines Kellerautomaten (AUT) zum Lesen eines einem aufgebauten Pfad (π) zugeordneten Wortes (ω(π)), wobei das Wort (ω(π) Labels (l(π)) eines Alphabets (Σ) enthält, welche von Kanten und/oder Knoten eines Netzwerksystems (NTW) unterstützte Protokolltechnologien (tck) und Anpassungsfunktionen darstellen, wobei ein Label (l(π)) des Wortes (ω(π) einer Kante (E) oder einem Knoten (N) des aufgebauten Pfads (π) zugeordnet ist, wobei der besagte Kellerautomat (AUT) umfasst:
- Einen Kellerspeicher (STK) und assoziierte Kellerspeicherbefehle (Ø);
- das Alphabet (Σ) von Labels (l(π)), welche von Kanten und/oder Knoten des Netzwerksystems unterstützte Protokolltechnologien (tck) und Anpassungsfunktionen darstellen;
- Zustände (st) und Übergänge (tr), welchen Labels (l(π)) des Alphabets (Σ) zugeordnet sind;
wobei das besagte Verfahren (MC) die folgenden Schritte umfasst:
- Erstellen von Kellerspeicherbefehlen (Φ), wobei:
- Wenn ein Label (l(π)) des Alphabets (Σ) für eine Einkapselungsanpassungsfunktion (xoy) repräsentativ ist, Erstellen eines Push-Befehls (XOY), welcher fähig ist, den Kellerspeicher (STK) mit dem besagten Label (l(π)) zu füllen;
- wenn ein Label (l(π)) des Alphabets (Σ) für eine Entkapselungsanpassungsfunktion (xdy) repräsentativ ist, Erstellen eines Entnahmebefehls (*Y̅O̅X̅*), welcher fähig ist, das inverse Label (l(π)) aus dem Kellerspeicher (STK) zu entfernten, und Erstellen eines Push-Befehls (XDY), welcher fähig ist, den Kellerspeicher mit dem besagten Label (l(π)) zu füllen;
- Herstellen von Zuständen (st) des Kellerautomaten (AUT), wobei:
- Wenn ein Label (I(π)) des Alphabets (Σ) für eine innerhalb eines Knotens und/oder einer Kante verwendete Protokolltechnologie (tck) repräsentativ ist, Herstellen eines Zustands (st), welcher mit dem besagten Label (I(π)) benannt wird;
- Herstellen von Übergängen (tr) des Kellerautomaten (AUT), wobei:
- für jedes für eine Anpassungsfunktion (xoy, xdy) repräsentative Label (I(π)) des Alphabets (Σ), Herstellen eines Übergangs (tr), dessen Anfangszustand (sts) durch den ersten Buchstaben des besagten Labels (I(π)) gekennzeichnet ist, und dessen Endzustand (ste) durch den letzten Buchstaben des besagten Labels (I(π)) gekennzeichnet ist, und Kennzeichnen des besagten Übergangs (tr) mit dem besagten Label (I(π));
- für jedes Label (I(π)) des Alphabets (Σ), welches für eine innerhalb eines Knotens und/oder einer Kante verwendete Protokolltechnologie (tck) repräsentativ ist, Herstellen eines Reflexivübergangs (tr) über dessen entsprechenden Zustand (st), und Kennzeichnen des besagten Übergangs (tr) mit dem besagten Label (I(π));
- Zuordnen von Kellerspeicherbefehlen (Φ) zu den besagten gemäß den Bedingungen (Cond) hergestellten Übergängen (tr), wobei:
- Wenn das Label (I(π)), welches einen Übergang (tr) kennzeichnet, für eine eingekapselte Anpassungsfunktion (xoy) repräsentativ ist, der entsprechende Push-Befehl (XOY) dem Übergang (tr) zugeordnet wird;
- wenn das Label (I(π)), welches einen Übergang (tr) kennzeichnet, für eine Entkapselungsanpassungsfunktion (xdy) repräsentativ ist, und wenn der obere Eingang des Kellerspeichers (STK) mit der inversen Anpassungsfunktion (yox) gefüllt ist, der entsprechende Entfernungsbefehl (*Y̅O̅X̅*) dem Übergang (tr) zugeordnet wird, und anderenfalls der entsprechende Push-Befehl (XDY) dem Übergang (tr) zugeordnet wird.

6. Verfahren (MC) nach dem vorstehenden Anspruch, wobei ein Label (I(π)) des Alphabets (Σ), welches für eine Anpassungsfunktion repräsentativ ist, aus drei Buchstaben (xoy, xdy) besteht, wobei der erste und der dritte Buchstabe die von der Anpassungsfunktion unterstützten Protokolltechnologien (tck) darstellen, und der zweite Buchstabe einen Typ TY der Anpassungsfunktion darstellt.

7. Verfahren (MC) nach einem beliebigen der vorstehenden Ansprüche 5 oder 6, wobei ein Label (I(π)) des Alphabets (Σ), welches für eine innerhalb eines Knotens und/oder einer Kante verwendete Protokolltechnologie (tck) repräsentativ ist, aus einem einzelnen Buchstaben besteht.

8. Verfahren (MC) nach einem beliebigen der vorstehenden Ansprüche 5 bis 7, wobei die Protokolltechnologie (tck) Ethernet, IP, Multiprotocol Label Switching (MPLS) oder Synchronous Digital Hierarchy (SDH) ist.

9. Verfahren (MC) nach einem beliebigen der vorstehenden Ansprüche 5 bis 8, wobei eine Anpassungsfunktion
- Multiprotocol Label Switching (MPLS) über IP; oder
- IP über Multiprotocol Label Switching (MPLS); oder
- Ethernet über IP; oder
- IP über Ethernet; oder
- Multiprotocol Label Switching (MPLS) über Ethernet; oder
- Ethernet über Multiprotocol Label Switching (MPLS); oder
- Synchronous Digital Hierarchy (SDH) über Ethernet; oder
eine der entsprechenden Entkapselungsanpassungsfunktionen ist.

10. Netzwerkverwaltungselement (NME) zum Prüfen eines zwischen einem Quellknoten (NS) und einem anderen Knoten (NI) aufgebauten Pfads (π) für ein Netzwerksystem (NTW), in Abhängigkeit von Anpassungsfunktionen, **dadurch gekennzeichnet, dass** das besagte Netzwerkverwaltungselement (NME) Mittel zum Durchführen des Verfahrens (MA) zur Prüfung eines Pfads gemäß einem beliebigen der vorstehenden Ansprüche 1 bis 3 aufweist.

11. Netzwerkverwaltungselement (NME) zum Prüfen eines zwischen einem Quellknoten (NS) und einem anderen Knoten (NI) aufgebauten Pfads (π) für ein Netzwerksystem (NTW), in Abhängigkeit von Anpassungsfunktionen, wobei das besagte Netzwerkverwaltungselement (NME) Mittel zum Durchführen des Verfahrens (MC) zur Einrichtung eines Kellerautomaten (AUT) gemäß einem beliebigen der vorstehenden Ansprüche 5 bis 9 aufweist.

12. Netzwerkverwaltungselement (NME) nach einem beliebigen der vorstehenden Ansprüche 10 und 11, wobei das Netzwerkverwaltungselement (NME):
- Ein Netzwerkverwaltungssystem (NMS); oder
- ein Pfadberechnungselement (PCE); oder
- ein Router; oder
- ein Betriebsunterstützungssystem (OSS); oder
- ein Administrative Owner (AO)
ist:

13. Netzwerkverwaltungselement (NME) nach einem beliebigen der vorstehenden Ansprüche 10 bis 12, wobei das Netzwerkverwaltungselement (NME) den Kellerautomaten (AUT) gemäß Anspruch 4 umfasst.

14. Netzwerksystem (NTW) zum Prüfen eines zwischen einem Quellknoten (NS) und einem anderen Knoten (NI) aufgebauten Pfads (π) für ein Netzwerksystem (NTW), in Abhängigkeit von Anpassungsfunktionen, wobei das besagte Netzwerksystem Mittel zum Verwalten eines Netzwerkverwaltungselements (NME) gemäß einem beliebigen der vorstehenden Ansprüche 10 bis 12 aufweist.

15. Computerprogramm-Produkt (PG1) für einen Computer, umfassend einen Befehlssatz, welcher, wenn er auf dem besagten Computer geladen ist, bewirkt, dass der Computer das Verfahren (MA) zur Prüfung eines Pfads gemäß einem beliebigen der Ansprüche 1 bis 3 durchführt.

16. Computerprogramm-Produkt (PG2) für einen Computer, umfassend einen Befehlssatz, welcher, wenn er auf dem besagten Computer geladen ist, bewirkt, dass der Computer das Verfahren (MC) zur Einrichtung eines Kellerautomaten (AUT) gemäß einem beliebigen der Ansprüche 5 bis 9 durchführt.

## Revendications

1. Procédé (MA) de vérification d'un chemin (π) créé entre un noeud source (NS) et un autre noeud (NI) pour un système de réseau (NTW), conformément à des fonctions d'adaptation, **caractérisé en ce que** ledit procédé comprend les étapes suivantes
- exécuter un automate à pile (AUT) pour lire un mot (ω(π)) associé au chemin créé (π), le mot (ω(π)) comprenant des étiquettes (I(π)) d'un alphabet (Σ) représentant des technologies de protocole (tck) et des fonctions d'adaptation prises en charge par des bords et/ou des noeuds du système de réseau (NTW), une étiquette (I(π)) du mot (ω(π)) étant associée à un bord (E) ou à un noeud (N) du chemin créé (π) ; et
- valider le chemin créé (π) conformément au résultat de la lecture du mot (ω(π)) et à l'état d'une pile (STK) dudit automate à pile (AUT), ladite pile (STK) étant modifiée pendant la lecture du mot (ω(π)), la validation du chemin créé (π) comprend les sous-étapes suivantes :
- lorsque le mot (ω(π)) a été lu entièrement et que l'autre noeud (NI) est différent d'un noeud de destination (ND), valider le chemin (π) créé avec les fonctions d'adaptation correspondant au mot lu (ω(π)) ;
- lorsque le mot (ω(π)) a été lu entièrement et que l'autre noeud (NI) est égal à un noeud de destination (ND) :
- si le noeud source (NS) et le noeud de destination (ND) sont de technologies de protocole homogènes (tck) et si la pile (STK) est vide, valider le chemin (π) avec les fonctions d'adaptation correspondant au mot lu (ω(π)) ;
- si le noeud source (NS) et le noeud de destination (ND) sont de technologies de protocole hétérogènes (tck) et si la pile (STK) comprend une étiquette représentative d'une fonction d'adaptation, valider le chemin (π) avec les fonctions d'adaptation correspondant au mot lu (ω(π)).

2. Procédé (MA) selon la revendication précédente 1, dans lequel un ensemble de mots (W) est lu.

3. Procédé (MA) selon l'une quelconque des revendications précédentes, dans lequel l'automate à pile (AUT) comprend :
- la pile (STK) et des commandes de piles (Φ) associées ;
- l'alphabet (Σ) d'étiquettes (I(π)) représentant des technologies de protocole (tck) et des fonctions d'adaptation prises en charge par des bords et/ou des noeuds du système de réseau (NTW) ;
- des états (st) et des transitions (tr) auxquels des étiquettes (I(π)) de l'alphabet (Σ) sont associées ;
ledit automate à pile (AUT) étant adapté pour :
- litre une étiquette (I(π)) formant ledit mot (ω(π)) ;
- vérifier s'il existe une transition (tr) associée à l'étiquette lue (I(π)) ;
- si une transition (tr) associée existe :
- activer des commandes de piles (Φ) sur la pile (STK) conformément aux conditions (Cond) associées à la transition (tr) ;
- passer à l'état de sortie (st*) de la transition (tr) ; et
- répéter les étapes précédentes avec l'étiquette (I(π)) suivante du mot (ω(π)).

4. Automate à pile (AUT) adapté pour lire un mot (ω(π)) associé à un chemin créé (π), le mot comprenant des étiquettes (I(π)) d'un alphabet (Σ) représentant des technologies de protocole (tck) et des fonctions d'adaptation prises en charge par des bords et/ou des noeuds du système de réseau (NTW), une étiquette (I(π)) du mot (ω(π)) étant associée à un bord (E) ou à un noeud (N) du chemin créé (π), ledit automate à pile (AUT) comprenant :
- une pile (STK) et des commandes de piles (Φ) associées ;
- l'alphabet (Σ) d'étiquettes (I(π)) représentant des technologies de protocole (tck) et des fonctions d'adaptation prises en charge par des bords et/ou des noeuds du système de réseau (NTW) ;
- des états (st) et des transitions (tr) auxquels des étiquettes (I(π)) de l'alphabet (Σ) sont associées ;
ledit automate à pile (AUT) étant adapté pour :
- lire une étiquette (I(π)) formant ledit mot (ω(π)) ;
- vérifier s'il existe une transition (tr) associée à l'étiquette lue (I(π)) ;
- si une transition (tr) associée existe :
- activer des commandes de piles (Φ) sur la pile (STK) conformément aux conditions (Cond) associées à la transition (tr) ;
- passer à l'état de sortie (st*) de la transition (tr) ; et
- répéter les étapes précédentes avec l'étiquette (I(π)) suivante du mot (ω(π)).

5. Procédé (MC) pour créer un automate à pile (AUT) pour lire un mot (ω(π)) associé à un chemin créé (π), le mot (ω(π)) comprenant des étiquettes (I(π)) d'un alphabet (Σ) représentant des technologies de protocole (tck) et des fonctions d'adaptation prises en charge par des bords et/ou des noeuds du système de réseau (NTW), une étiquette (I(π)) du mot (ω(π)) étant associée à un bord (E) ou à un noeud (N) du chemin créé (π), ledit automate à pile (AUT) comprenant :
- une pile (STK) et des commandes de piles (Φ) associées ;
- l'alphabet (Σ) d'étiquettes (I(π)) représentant des technologies de protocole et des fonctions d'adaptation prises en charge par des bords et/ou des noeuds du système de réseau (NTW) ;
- des états (st) et des transitions (tr) auxquels des étiquettes (I(π)) de l'alphabet (Σ) sont associées ;
ledit procédé (MC) comprenant les étapes suivantes :
- créer des commandes de piles (Φ), où :
- lorsqu'une étiquette (I(π)) de l'alphabet (Σ) est représentative d'une fonction d'adaptation d'encapsulation (xoy), créer une commande de poussée (XOY) qui peut remplir la pile (STK) avec ladite étiquette (I(π)) ;
- lorsqu'une étiquette (I(π)) de l'alphabet (Σ) est représentative d'une fonction d'adaptation de désencapsulation (xdy), créer une commande de retrait (YOX) qui peut retirer l'étiquette inverse (I(π)) de la pile (STK) et créer une commande de poussée (XDY) qui peut remplir la pile avec ladite étiquette (I(π)) ;
- créer des états (st) de l'automate à pile (AUT), où
- lorsqu'une étiquette (I(π)) de l'alphabet (Σ) est représentative d'une technologie de protocole (tck) utilisée dans un noeud et/ou un bord, créer un état (st) qui porte le nom de ladite étiquette (I(π)) ;
- créer des transitions (tr) de l'automate à pile (AUT), où :
- pour chaque étiquette (I(π)) de l'alphabet (Σ) représentative d'une fonction d'adaptation (xoy, xdy), créer une transition (tr) ayant comme état de départ (sts) la première lettre de ladite étiquette (I(π)), et ayant comme état final (ste) la dernière lettre de ladite étiquette (I(π)), et étiqueter ladite transition (π) avec ladite étiquette (I(π)) ;
- pour chaque étiquette (I(π)) de l'alphabet (Σ) représentative d'une technologie de protocole utilisée (tck) dans un noeud et/ou un bord, créer une transition réflexive (tr) sur son état correspondant (st), et étiqueter ladite transition (tr) avec ladite étiquette (I(π)) ;
- associer des commandes de piles (Φ) auxdites transitions (tr) créées conformément aux conditions (Cond), où
- lorsque l'étiquette (I(π)) étiquetant une transition (tr) est représentative d'une fonction d'adaptation encapsulée (xoy), la commande de poussée correspondante (XOY) est associée à la transition (tr) ;
- lorsque l'étiquette (I(π)) étiquetant une transition (tr) est représentative d'une fonction d'adaptation de désencapsulation (xdy) et si l'entrée supérieure de la pile (STK) est remplie avec la fonction d'adaptation inverse (yox), la commande de retrait correspondante (YOX) est associée à la transition (tr), sinon la commande de poussée correspondante (XDY) est associée à la transition (tr).

6. Procédé (MC) selon la revendication précédente, dans lequel une étiquette (I(π)) de l'alphabet (Σ) représentative d'une fonction d'adaptation est composée de trois lettres (xoy, xdy), les première et troisième lettres représentant les technologies de protocole (tck) prises en charge par la fonction d'adaptation, et la deuxième lettre représentant un type TY de la fonction d'adaptation.

7. Procédé (MC) selon l'une quelconque des revendications précédentes 5 et 6, dans lequel une étiquette (I(π)) de l'alphabet (Σ) représentative d'une technologie de protocole (tck) utilisée dans un noeud et/ou un bord est composée d'une seule lettre.

8. Procédé (MC) selon l'une quelconque des revendications précédentes 5 à 7, dans lequel la technologie de protocole (tck) est Ethernet, IP, commutation multiprotocole par étiquette (MPLS) ou hiérarchie numérique synchrone (SDH).

9. Procédé (MC) selon l'une quelconque des revendications précédentes 5 à 8, dans lequel une fonction d'adaptation est :
- commutation multiprotocole par étiquette (MPLS) sur IP ; ou
- IP sur commutation multiprotocole par étiquette (MPLS) ; ou
- Ethernet sur IP ; ou
- IP sur Ethernet ; ou
- commutation multiprotocole par étiquette (MILS) sur Ethernet ; ou
- Ethernet sur commutation multiprotocole par étiquette (MPLS) ; ou
- hiérarchie numérique synchrone (SDH) sur Ethernet ; ou
une des fonctions d'adaptation de désencapsulation correspondantes.

10. Élément de gestion de réseau (NME) pour vérifier un chemin (π) créé entre un noeud source (NS) et un autre noeud (NI) pour un système de réseau (NTW), conformément à des fonctions d'adaptation, **caractérisé en ce que** ledit élément de gestion de réseau (NME) dispose de moyens pour exécuter le procédé (MA) pour vérifier un chemin conformément à l'une quelconque des revendications précédentes 1 à 3.

11. Élément de gestion de réseau (NME) pour vérifier un chemin (π) créé entre un noeud source (NS) et un autre noeud (NI) pour un système de réseau (NTW), conformément à des fonctions d'adaptation, ledit élément de gestion de réseau (NME) disposant de moyens pour exécuter le procédé (MC) pour créer un automate à pile (AUT) conformément à l'une quelconque des revendications précédentes 5 à 9.

12. Élément de gestion de réseau (NME) selon l'une quelconque des revendications précédentes 10 et 11, dans lequel l'élément de gestion de réseau (NME) est :
- un système de gestion de réseau (NMS) ; ou
- un élément de calcul de chemin (PCE) ; ou
- un routeur ; ou
- un système de support opérationnel (OSS) ; ou
- un propriétaire d'administration (AO).

13. Élément de gestion de réseau (NME) selon l'une quelconque des revendications précédentes 10 à 12, ledit élément de gestion de réseau (NME) comprenant l'automate à pile (AUT) selon la revendication 4.

14. Système de réseau (NTW) pour vérifier un chemin (π) créé entre un noeud source (NS) et un autre noeud (NI) pour un système de réseau (NTW), conformément à des fonctions d'adaptation, ledit système de réseau disposant de moyens pour gérer un élément de gestion de réseau (NME) selon l'une quelconque des revendications précédentes 10 à 12.

15. Produit de programme informatique (PG1) pour un ordinateur, comprenant un ensemble d'instructions qui, lorsqu'elles sont chargées dans ledit ordinateur, entraînent l'exécution par l'ordinateur du procédé (MA) pour vérifier un chemin selon l'une quelconque des revendications 1 à 3.

16. Produit de programme informatique (PG2) pour un ordinateur, comprenant un ensemble d'instructions qui, lorsqu'elles sont chargées dans ledit ordinateur, entraînent l'exécution par l'ordinateur du procédé (MC) pour créer un automate à pile (AUT) selon l'une quelconque des revendications 5 à 9.
